# EUROPÄISCHE PATENTANMELDUNG

(11) **EP 4 007 098 A1**
(43) Veröffentlichungstag der Anmeldung: **01.06.2022**
(21) Anmeldenummer: 21208902.3
(22) Anmeldetag: 18.11.2021
(51) Int. Cl.: H02G 3/18, H02G 3/38, F16B 37/08, H02G 3/12

(54) **UNTERFLURINSTALLATIONSBAUTEIL**

(30) Priorität: 25.11.2020 DE 202020106785 U
(71) Anmelder: OBO Bettermann Hungary Kft., 2347 Bugyi (HU)
(72) Erfinder: Péter Bakonyi, 1171 Budapest (HU); Zsolt János Dobóczi, 1239 Budapest (HU)
(74) Vertreter: Haverkamp Patentanwälte PartG mbB

(57) **Zusammenfassung**

Die Erfindung betrifft ein Unterflurinstallationsbauteil mit einem vor seinem Einbau in einen insbesondere durch Gießen zu erstellenden Fußboden durch Nivellierschrauben 4, 4.1 bodenseitig abgestützten Rahmen 2, 2.1, 3, welche Nivellierschrauben 4, 4.1 mit ihrem Gewinde jeweils ein komplementäres Gewinde einer Nivellierschraubenführung 5, 5.1 des Rahmens kämmen, welche Nivellierschraubenführung 5, 5.1 ein gegenüber zumindest einem weiteren Führungselement verstellbares Gewindesegment 7, 7.1 aufweist wobei an das verstellbare Gewindesegment 7, 7.1 ein flexibles Zugmittel 8 und an dieses wiederum ein manuell betätigbares Betätigungselement 9 angeschlossen ist, mit dem auf das Zugmittel 8 zum Verstellen des Gewindesegments 7, 7.1 aus einer Ausgangsstellung, etwa seiner gewindekämmenden Stellung, in eine zweite Stellung, etwa in seine Freigabestellung, ein Zug ausübbar ist und dass Rückstellmittel 21 zum Zurückstellen des Gewindesegments 7, 7.1 in seine Ausgangsstellung bei nicht mehr betätigtem Betätigungselement 9 vorgesehen sind.

## Beschreibung

Die Erfindung betrifft ein Unterflurinstallationsbauteil mit einem vor seinem Einbau in einen insbesondere durch Gießen zu erstellenden Fußboden durch Nivellierschrauben bodenseitig abgestützten Rahmen, welche Nivellierschrauben mit ihrem Gewinde jeweils ein komplementäres Gewinde einer Nivellierschraubenführung des Rahmens kämmen, welche Nivellierschraubenführung ein gegenüber zumindest einem weiteren Führungselement verstellbares Gewindesegment aufweist.

Unterflurinstallationsbauteile dienen zum Erstellen von Unterflurinstallationssystemen, insbesondere für elektrische Unterflurinstallationen. Bei den Unterflurinstallationsbauteilen kann es sich um Kanäle, Kanalformteile, etwa zur Richtungsänderung, Unterfluranschlussdosen, Unterflurgerätedosen oder dergleichen handeln. Ein solches Unterflurinstallationssystem ist in den Fußbodenaufbau integriert und daher mitunter auch im Estrich vergossen. Unterflurinstallationsbauteile, die estrichbündig verlegt werden sollen, müssen auf Estrichniveau nivelliert werden, bevor der Estrich zur Erstellung des Bodens gegossen wird. Gleiches gilt auch für den Einbau eines solchen Unterflurinstallationsbauteils in einen Hohlboden. Zu diesem Zweck verfügen zu nivellierende Unterflurinstallationsbauteile über einen Nivellierrahmen als oberseitigen Abschluss, etwa eines Kanals oder einer Unterfluranschlussdose. In einer Unterfluranschlussdose werden an dem Nivellierrahmen Geräteeinbaueinheiten, Mediensäulen, Deckel oder dergleichen angebracht. Zum Nivellieren eines solchen Rahmens sind an diesem mehrere Nivellierschrauben angeordnet, die sich gemäß einer vorbekannten Ausgestaltung an einem Bodenblech des Unterflurinstallationsbauteils abstützen. Das Bodenblech seinerseits ist zweckmäßigerweise mit Schrauben untergrundseitig festgelegt. Um ein Eindringen von Estrich in ein solches Unterflurinstallationsbauteil zu verhindern, sind zwischen dem Nivellierrahmen und Bodenblech Seitenteile als Schalungselemente angeordnet.

Bei derartigen Unterflurinstallationsbauteilen kann es sich beispielsweise um Unterflurgerätedosen handeln. Bei höhennivellierbaren Unterflurinstallationsbauteilen, wie etwa Unterflurgerätedosen, ist die Länge der Nivellierschrauben mitunter auf die voraussichtliche Höhe der geplanten Oberkante des Estrichs abgestimmt. Die Variabilität dieser Höhe ist jedoch recht groß. Daher werden derartige Unterflurinstallationsbauteile auch mit relativ langen Gewindestangen als Nivellierschrauben ausgerüstet. Die nicht benötigten Gewindeteilabschnitte müssen nach der Nivellierung abgetrennt werden. Aus EP 2 083 490 B1 ist eine Unterflurgerätedose für elektrische Installationen bekannt, bei der eine Höhenschnellverstellung möglich ist. Wenn eine größere Höhe zu überbrücken ist, kann der Gewindeeingriff der Nivellierschrauben in das komplementäre Gewinde des Rahmens gelöst werden, sodass dann der Rahmen gegenüber den Nivellierschrauben bzw. die Nivellierschrauben gegenüber dem Rahmen in längsaxialer Richtung translatorisch verstellbar sind. Zu diesem Zweck verfügt der Rahmen dieser vorbekannten Unterflurgerätedose über ein sich etwa über 180° erstreckendes Innengewindesegment, welches von dem Gewinde an der Nivellierschraube gekämmt wird. Der diesem Gewindesegment zur Vervollständigung der Nivellierschraubenführung gegenüberliegende Teil ist glatt ausgeführt. Die Höhenschnellverstellung lässt sich dadurch herbeiführen, dass das Gewindesegment aus seiner das Gewinde der Nivellierschraube kämmenden Stellung in radialer Richtung abgerückt wird. Bewirken kann man dieses mit einer schaftförmigen Handhabe, die in eine diesbezüglich vorbereitete Öffnung des Rahmens eingesetzt und gegen eine Stellschräge, außenseitig an dem Gewindesegment angeformt, wirkt, wodurch dieses Gewindesegment in radialer Richtung von der Nivellierschraube wegbewegt wird.

Auch wenn mit einer solchen Unterflurgerätedose eine Höheneinrichtbarkeit des Rahmens bezüglich jeder einzelnen Nivellierschraube rasch bewirkt werden kann, wäre es wünschenswert, wenn bei einem solchen Unterflurinstallationsbauteil die Möglichkeit bestehen würde, dass die Handhabbarkeit zum Einrichten desselben, insbesondere wenn als Unterflurgerätedose ausgeführt, vereinfacht ist. Somit liegt der Erfindung die Aufgabe zugrunde, ein solches Unterflurinstallationsbauteil vorzuschlagen.

Gelöst wird diese Aufgabe erfindungsgemäß durch ein eingangs genanntes, gattungsgemäßes Unterflurinstallationsbauteil, bei dem an das verstellbare Gewindesegment ein flexibles Zugmittel und an dieses wiederum ein manuell betätigbares Betätigungselement angeschlossen ist, mit dem auf das Zugmittel zum Verstellen des Gewindesegments aus einer Ausgangsstellung, etwa seiner gewindekämmenden Stellung, in eine zweite Stellung, etwa in seine Freigabestellung, ein Zug ausübbar ist und dass Rückstellmittel zum Zurückstellen des Gewindesegments in seine Ausgangsstellung bei nicht mehr betätigtem Betätigungselement vorgesehen sind.

Bei diesem Unterflurinstallationsbauteil, welches beispielsweise als Unterflurinstallationsdose oder als Unterflurinstallationskanal ausgebildet sein kann, dient ein Zugmittel zum Verstellen eines Gewindesegmentes einer Nivellierschraubenführung aus einer ersten Stellung in eine zweite Stellung. Je nach Auslegung des Unterflurinstallationsbauteils kann die erste Stellung des Gewindesegmentes eine Stellung sein, in der dieses das Gewinde einer in die Nivellierschraubenführung eingesetzten Nivellierschraube kämmt. In einer solchen Ausgestaltung ist das Gewindesegment mit dem Zugmittel aus dieser Stellung in eine Freigabestellung als zweite Stellung ausrückbar. Bei einer anderen Auslegung eines solchen Unterflurinstallationsbauteils ist die ausgerückte Stellung des Gewindesegmentes die Ausgangsstellung, sodass dieses durch das Zugmittel in ihre gewindekämmende Stellung eingerückt wird. In beiden Fällen erfolgt eine Verstellung des Gewindesegmentes mit dem Zugmittel durch Ausüben eines Zuges. Bei einem solchen Zugmittel kann es sich beispielsweise um ein Seil, etwa einen Bowdenzug, handeln. Das Gewindesegment selbst ist typischerweise um eine horizontale Schwenkachse schwenkbar gelagert. In Abhängigkeit von dem Abstand des Angriffspunktes des Zugmittels an dem Gewindesegment von der Schwenkachse ist der erforderliche Bewegungsbetrag einrichtbar, den das Zugmittel auf Zug belastet werden muss, um das Gewindesegment hinreichend weit verstellen, beispielsweise ausrücken zu können. Auch ein translatorisches Verstellen des Gewindesegmentes ist möglich. Das Zugmittel selbst ist hinreichend zugfest, damit durch eine auf das Zugmittel ausgeübte Zugkraft eine entsprechende Verstellung des Gewindesegmentes erfolgen kann. Das Unterflurinstallationsbauteil verfügt des Weiteren über Rückstellmittel, mit denen ein aus seiner Ausgangsstellung verstelltes Gewindesegment in seine Ausgangsstellung zurückverstellt werden kann, mithin mit dem beispielsweise ein aus seiner gewindekämmenden Stellung ausgerücktes Gewindesegment in seine gewindekämmende Stellung zurückverstellt werden kann. Zum Ausüben einer auf das Zugmittel wirkenden Zugkraft dient ein manuell betätigbares Betätigungselement, welches an das Zugmittel angeschlossen ist, um bei einer Betätigung ein Zug auf das Zugmittel ausüben zu können. Zum Zurückstellen des zumindest einen durch das Zugmittel ausgerückten Gewinde-segmentes wirken die Rückstellmittel, wenn das Betätigungselement nicht mehr betätigt wird. Damit erfolgt eine Gewindesegmentverstellung aus seiner Ausgangsstellung heraus gegen die Rückstellkraft des oder der Rückstellmittel.

Das Vorsehen eines flexiblen Zugmittels, also beispielsweise eines Seils oder dergleichen zum Verstellen eines Gewindesegmentes hat mehrere Vorteile. Zum einen ist hierdurch ein Stellmittel bereitgestellt, welches kostengünstig ist. Des Weiteren erlaubt dieses aufgrund seiner Flexibilität, wenn erforderlich, auch eine Erstreckung bzw. Verlegung über nichtlineare Strecken zum Betätigungselement. Darüber hinaus besteht bei einem solchen Zugmittel die Möglichkeit, voneinander beabstandete Gewindesegmente miteinander durch ein solches Zugmittel zu verbinden, sodass bei Ausüben eines Zuges auf dieses Zugmittel beide Gewindesegmente gleichzeitig verstellt werden. Ohne weiteres lassen sich an ein solches Betätigungselement auch mehrere Zugmittel oder auch verzweigte Zugmittel anschließen, sodass auch die Gewindesegmente von mehr als zwei Nivellierschraubenführungen durch eine einzige manuelle Betätigung des Betätigungselementes verstellt werden können. Dieses ist beispielsweise bei Kanalsegmenten zweckmäßig, wenn diese an jeder Seite über mehrere Nivellierschrauben bodenseitig abgestützt sind. Diese können dann insgesamt durch eine einzige Betätigung höhenschnelleingerichtet werden.

In einem bevorzugten Ausführungsbeispiel macht man sich die flexiblen Eigenschaften eines solchen Zugmittels zunutze, um auf dieses einen Zug auszuüben, indem das Betätigungselement beziehungsweise ein dem Betätigungselement zugeordnetes Stellorgan quer zur Verbindungsrichtung von Gewindesegment und Betätigungselement translatorisch bewegt wird.

Da zum Verstellen, beispielsweise zum Ausrücken eines solchen Gewindesegmentes in aller Regel keine größere Kraft aufgewendet werden muss und somit das Zugmittel bei einem schwenkbar angelenkten Gewindesegment mit kurzem Abstand zur Schwenkachse angeschlossen werden kann, wird nur ein geringer Betätigungshub zum Ausüben des benötigten Zugmittelweges benötigt. Daher kann das Betätigungselement kleinbauend ausgelegt sein. Bei einer Ausgestaltung, bei der durch das Zugmittel die Gewindesegmente zweier beabstandeter Nivellierschraubenführungen verbunden sind, kann das Betätigungselement ohne eine erforderliche rahmenseitige Montage zwischen den beiden Gewindesegmenten quasi an beliebiger Position an das Zugmittel angeschlossen werden. Daher ist man bezüglich der Anbringung des Betätigungselementes bei einer solchen Ausgestaltung sehr frei in den zur Verfügung stehenden Möglichkeiten.

In einer Ausgestaltung eines translatorisch zu betätigenden Betätigungselementes verfügt dieses über ein gegenüber einem Grundkörper verstellbares Stellorgan. Der Grundkörper verfügt über eine Stellorganführung, durch die das Stellorgan mit einem Schaft hindurchgreift. Der Grundkörper verfügt des Weiteren über eine Zugmittelführung. Die Zugmittelführung ist ausgelegt, damit das Zugmittel rückseitig zu der Stellorganführung und in der Flucht der Stellorganführung gehalten ist. Das Stellorgan kann somit mit dem freien Ende seines die Stellorganführung durchgreifenden Schaftes, wenn translatorisch durch die Stellorganführung hindurchgedrückt bzw. in diese eingedrückt, das Zugmittel erfassen und dieses quer zu seiner eigentlichen Längserstreckung wegdrücken, sodass auf diese Weise ein Zug ausgeübt und das oder die daran angeschlossenen Gewindesegmente verstellt werden. Vorzugsweise verfügt das Stellorgan an seinem zugmittelseitigen Ende über eine Zugmittelführung, typischerweise ausgelegt als schlitzförmige Vertiefung, in die das Zugmittel eingreift. Dadurch ist gewährleistet, dass bei einem ungünstigen Zugmittelverlauf das Zugmittel nicht von der Betätigungsseite des Stellorgans abrutscht. Die Zugmittelführung am Stellorgan kann hinterschnitten sein, sodass diese auf das Zugmittel aufgeclipst werden kann.

An dem dem zugmittelseitigen Ende des Stellorgans gegenüberliegenden Ende verfügt dieses gemäß einem bevorzugten Ausführungsbeispiel über eine Betätigungsplatte als Handhabe, auf die ein Benutzer mit beispielsweise seinem Daumen den erforderlichen Druck ausübt, um das Stellorgan durch die Stellorganführung ähnlich der Betätigung einer Spritze in den Grundkörper einzudrücken, um das oder die an das Zugmittel angeschlossenen Gewindesegmente zu verstellen, also beispielsweise aus ihrer gewindekämmenden Stellung in ihre Freigabestellung auszurücken. Eine solche Betätigungsplatte kann rutschhemmende Strukturen tragen, damit ein Abrutschen verhindert ist. Bei diesen rutschhemmenden Strukturen kann es sich um einen in die Betätigungsplatte eingebrachten oder von dieser erhabenen Schriftzug handeln.

Gehalten wird das Zugmittel an dem Betätigungselement beispielsweise an zumindest einem in radialer Richtung von dem Grundkörper abragenden Zugmittelführungsarm. Dieser verfügt an seinem freien Ende über eine Zugmittelführung. Diese ist ausgelegt, dass das Zugmittel diese Zugmittelführung durchgreift. Die Längsachse der Zugmittelführung weist typischerweise in die Richtung der Nivellierschraubenführung, dessen Gewindesegment an das Zugmittel angeschlossen ist. Ist das Betätigungselement an zwei Gewindesegmente voneinander beabstandeter Nivellierschraubenführungen angeschlossen, verfügt dieses über zwei derartige Zugmittelführungsarme. Bei einer Betätigung des Stellorgans können diese sodann mit jeweils einem Finger hintergriffen werden, um ein Widerlager für das Eindrücken des Stellorgans mit dem Daumen zu bilden. Der eine oder die beiden Zugmittelführungsarme sind typischerweise gekrümmt ausgeführt, wobei die konvexe Krümmungsseite zu der Stellorganführung des Grundkörpers weist. Die durch den oder die Zugmittelführungsarme bereitgestellte gekrümmte Oberfläche dient als Führungsfläche für das Zugmittel, wenn durch das Stellorgan in Querrichtung zu seiner Längserstreckung ein Betätigungshub ausgeübt wird. Die von der Stellorganführung wegweisenden Enden dieser gekrümmten Zugmittelführungsarme befinden sich außerhalb der Flucht der Stellorganführung, sodass zwischen die diesseitigen Enden der Zugmittelführungsarme das Stellorgan mit dem von diesem erfassten Seil hindurchgeführt werden kann.

Das Stellorgan kann beispielsweise ein zylindrischer Hülsenkörper sein.

Das Stellorgan und der Grundkörper sind vorzugsweise Kunststoffspritzgussteile. In einem bevorzugten Ausführungsbeispiel ist vorgesehen, dass beide Teile - Grundkörper und Stellorgan - einstückig spritzgegossen sind und das Stellorgan durch eine Verbindungslasche somit an den Grundkörper angeformt ist. Dann ist das Stellorgan unverlierbar an dem Grundkörper gehalten, auch wenn dieses mit seinem Schaft nicht in die Stellorganführung eingreift.

Als Rückstellmittel können bei einer Auslegung des Unterflurinstallationsbauteils, bei dem die Gewindesegmente bei einer Betätigung des Betätigungselementes aus ihrer gewindekämmenden Stellung ausgerückt werden, beispielsweise elastische Ringe dienen, die um die Bestandteile einer Nivellierschraubenführung und damit auch ihres Gewindesegmentes außenseitig herumgelegt sind. Ein Ausrücken eines solchen Gewindesegmentes erfolgt sodann gegen die Kraft eines solchen elastischen Ringes. Selbstverständlich können auch andere Rückstellmittel eingesetzt werden. Die Verwendung eines elastomeren O-Ringes, welcher auf der Mantelfläche einer solchen Nivellierschraubenführung sitzt, ist eine einfach zu montierende, wenig kostenintensive Variante.

Ein schwenkbarer Anschluss des Gewindesegments an dem Rahmenbauteil kann beispielsweise dadurch erreicht werden, dass das Gewindesegment oberseitig einen Lagerwulst trägt, der in eine hinterschnittene Lageröffnung des Rahmenbauteils eingreift, vorzugsweise in dieser nach Art einer Raste gehalten ist. Dieses vereinfacht die Montage der beiden Bauteile miteinander.

Das Gewindesegment braucht, um den kämmenden Effekt mit dem Gewinde einer in die Nivellierschraubenführung befindlichen Nivellierschraube zu erzielen, keine größere Umfangserstreckung aufzuweisen. Vielmehr ist es vorteilhaft, wenn sich das Gewindesegment nur über ein kleineres Winkelsegment von etwa 10 bis 15 Grad bis zu 45 oder 60 Grad erstreckt, wobei eine Winkelerstreckung über 25 Grad als völlig ausreichend angesehen wird. Erstreckt sich das Gewindesegment nur über einen geringeren Winkelbetrag, ist infolge dessen die durch das zumindest eine weitere Führungssegment verbliebene Nivellierschraubenführung bei ausgerücktem Gewindesegment nicht nur mechanisch stabiler, sondern stellt umfänglich für eine darin geführte Nivellierschraube eine in alle Richtungen wirkende Führung dar, sodass die Nivellierschraube in der Nivellierschraubenführung nur axial und somit nur translatorisch bewegt werden kann.

Bei einer solchen gegenüber vorbekannten Ausgestaltungen eher schmalen Gewindesegmentauslegung kann das zumindest eine weitere Führungssegment der Nivellierschraubenführung geschlitzt sein, und zwar mit einer Schlitzweite, in die das Gewindesegmentbauteil mit seinem Gewindesegment einpasst.

In einer Weiterbildung ist vorgesehen, dass das Stellorgan in seiner in die Stellorganführung eingedrückten Stellung verrastet am Grundkörper gehalten ist. Bei einer Ausgestaltung des Unterflurinstallationsbauteils, bei der das oder die Gewindesegmente bei einer Betätigung des Betätigungselementes in ihre gewindekämmende Stellung eingebracht werden, dient eine solche Verrastung dem Zweck, die gewindekämmende Stellung des oder der Gewindesegmente zu fixieren. Bei einer Ausgestaltung des Unterflurinstallationsbauteils, bei dem durch eine Betätigungselementbetätigung die Gewindesegmente aus ihrer gewindekämmenden Stellung ausgerückt werden, dient diese Fixierung zum Entkoppeln des Einbaurahmens von den Nivellierschrauben, um einer Schwindung bei dem Aushärten eines Estriches auszugleichen.

Nachfolgend ist die Erfindung anhand eines Ausführungsbeispiels unter Bezugnahme auf die beigefügten Figuren beschrieben. Es zeigen:
- **Fig. 1:**: Eine Zweiseitendarstellung eines Rahmenteils eines Unterflurinstallationsbauteils mit diesem in einer Seitenansicht (linker Teil) und in einer Ansicht von unten (rechter Teil) mit dem jeweils einer Nivellierschraubenführung zugeordneten Gewindesegment in gewindekämmender Stellung,
- **Fig. 2:**: die Darstellung des Rahmenbauteils der Figur 1 mit ausgerückten Gewindesegmenten,
- **Fig. 3:**: eine Darstellung des mittleren Abschnittes des Rahmenteils der Figur 1 in einer Ansicht von unten mit festgelegtem Stellorgan,
- **Fig. 4:**: das Betätigungselement des Rahmenteils der vorstehenden Figuren in einer perspektivischen Ansicht in einer ersten Stellung von Grundkörper und Stellorgan und
- **Fig. 5:**: das Betätigungselement der Figur 4 mit dem an den Grundkörper festgelegten Stellorgan entsprechend der in Figur 3 gezeigten Stellung.

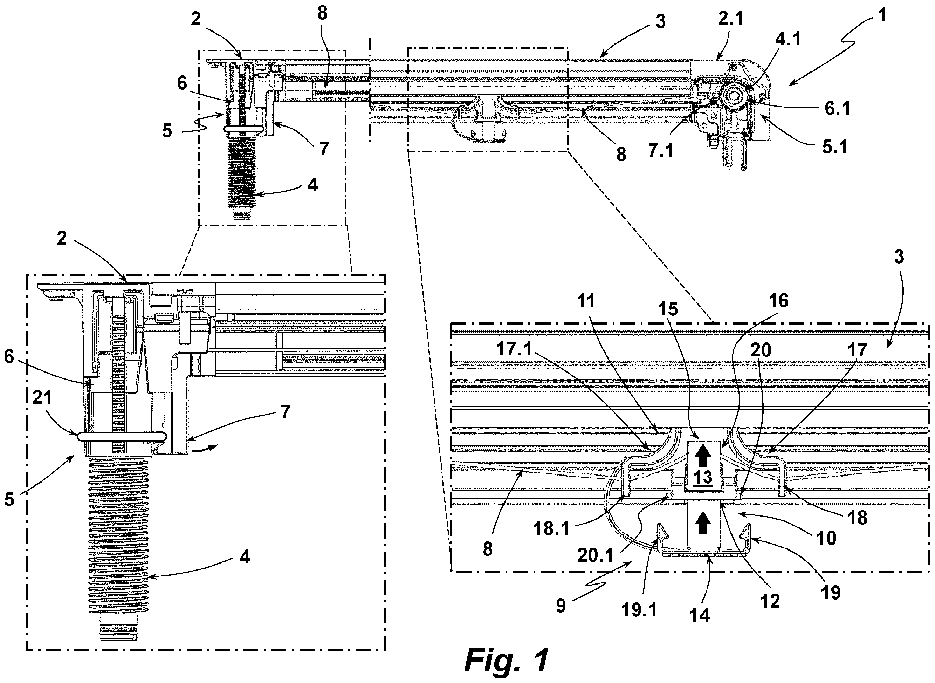

Figur 1 zeigt ein Rahmenteil 1 eines im Übrigen nicht näher dargestellten Unterflurinstallationsbauteils, wobei es sich bei dem Rahmenteil 1 um ein solches einer Unterflurgerätedose handelt. Das Rahmenteil 1 wird mit weiteren Rahmenteilen zum Ausbilden der Unterflurgerätedose zusammengesetzt. Das Rahmenteil 1 verfügt über zwei Eckstücke 2, 2.1. Die beiden Eckstücke 2, 2.1 sind durch ein Rahmenstück 3 miteinander verbunden. Die Eckstücke 2, 2.1 bilden zusammen mit weiteren Eckstücken und diese verbindenden Rahmenstücken 3 einen Nivellierrahmen. Dieser ist bodenseitig abgestützt. Zur bodenseitigen Abstützung des Nivellierrahmens dienen Nivellierschrauben 4, 4.1. Die Nivellierschrauben 4, 4.1 tragen ein Außengewinde. Die Nivellierschrauben 4, 4.1 sind in nicht näher dargestellter Weise bodenseitig abgestützt. Die Nivellierschrauben 4, 4.1 greifen jeweils in eine Nivellierschraubenführung 5, 5.1 jeweils eines Eckstückes 2, 2.1 ein. Jede Nivellierschraubenführung 5, 5.1 verfügt über ein Führungsstück 6, 6.1. Die Führungsstücke 6, 6.1 tragen kein Innengewinde, sondern dienen allein der Führung der darin eingesetzten Nivellierschrauben 4, 4.1. Teil jeder Nivellierschraubenführung 5, 5.1 ist ein Gewindesegment 7, 7.1. Das Gewindesegment 7, 7.1 trägt an seiner zur Nivellierschraube 4, 4.1 weisenden Seite ein Gewindesegmentabschnitt, welches das Gewinde einer darin eingesetzten Nivellierschraube 4, 4.1 kämmt. Bei den Gewindesegmenten 7, 7.1 handelt es sich um in Umfangsrichtung der Führungsstücke 6, 6.1 gesehen schmale Bauteile, welche in eine Gewindesegmentaussparung des jeweiligen Führungsstückes 6, 6.1 eingreifen. Die Gewindesegmente 7, 7.1 sind verschwenkbar ausgeführt, wie dieses anhand des Gewindesegmentes 7 des Eckstückes 2 in der vergrößerten Darstellung durch einen Blockpfeil angedeutet ist. Das Gewindesegment 7 ist um eine horizontale Schwenkachse verschwenkbar. Gleiches gilt für das Gewindesegment 7.1.

Die beiden Gewindesegmente 7, 7.1 sind durch ein bei dem dargestellten Ausführungsbeispiel als Bowdenzug 8 ausgelegtes flexibles Zugmittel miteinander verbunden. Angeschlossen an das Zugmittel 8 ist ein Betätigungselement 9. Das Betätigungselement 9 verfügt über ein Stellorgan 10 und einen Grundkörper 11. Der Grundkörper 11 verfügt über eine Stellorganführung 12. Durch diese greift der Schaft 13 des zylindrischen Stellorgans 10. An dem in Figur 1 unteren Ende befindet sich an dem Stellorgan 10 eine Betätigungsplatte 14 als Handhabe, an der das Stellorgan 10 in die Stellorganführung 12 des Grundkörpers 11 eingedrückt werden kann. An dem Fuß 15 des Stellorgans 10 befindet sich eine schlitzartige Zugmittelführung 16, durch die das Bowdenzug 8 hindurchgeführt ist. Zum Führen und Halten des Bowdenzugs 8 sind an den Grundkörper 10 zwei Zugmittelführungsarme 17, 17.1 angeformt, und zwar jeweils an derjenigen Seite, die zu einem Gewindesegment 7 bzw. 7.1 weist. Die Zugmittelführungsarme 17, 17.1 sind, wie aus der vergrößerten Darstellung des Betätigungselementes 9 der Figur 1 gut zu erkennen, gekrümmt, wobei die Außenseite der Krümmung in Richtung zu dem Schaft 13 des Stellorgans 10 weist. Zwischen den beiden Zugmittelführungsarmen 17, 17.1 ist hinreichender Platz vorhanden, damit das Stellorgan 10 mit dem in seiner Zugmittelführung 16 befindlichen Bowdenzug 8 zwischen diese geführt werden kann. An den in radialer Richtung von dem Grundkörper abragenden Enden befindet sich an jedem Zugmittelführungsarm 17, 17.1 eine abgekantete Lasche 18, 18.1 mit einer darin eingebrachten Zugmittelführung. Durch die in den Laschen 18, 18.1 eingebrachten Zugmittelführungen und die in Figur 1 gezeigte Stellung des Stellorgans 10, welches dieses in einer auf den Bowdenzug 8 keinen Zug auswirkenden Stellung zeigt, ist der Bowdenzug 8 unter Ausbildung einer Welle in dem Betätigungselement 9 gehalten. Aufgrund des in die Zugmittelführungen eingreifenden Bowdenzuges 8 ist das Betätigungselement 9 an dem Bowdenzug 8 unverlierbar gehalten.

An der Betätigungsplatte 14 befinden sich zwei von dieser in Richtung zum Grundkörper 11 abgewinkelte Rasthaken 19, 19.1, durch die das Stellorgan 10 an dem Grundkörper 11 festgelegt werden kann. Der Grundkörper 11 trägt zu diesem Zweck komplementäre Rastnocken 20, 20.1, die von den Rasthaken 19, 19.1 zum Festlegen des Stellorgans 10 an dem Grundkörper 11 diese hintergreifen.

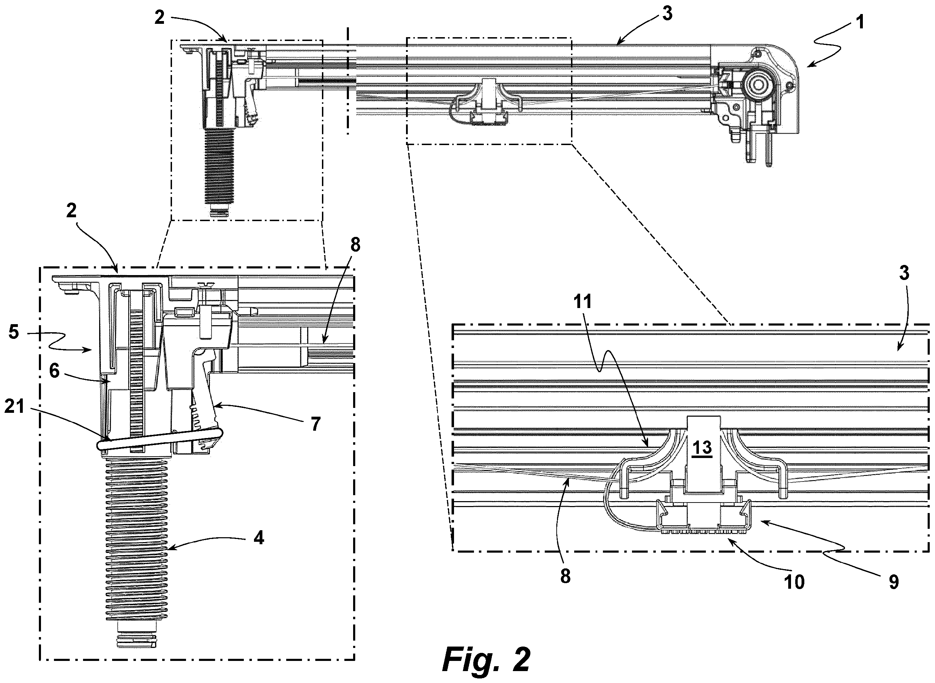

Zum Ausüben einer Zugkraft auf den Bowdenzug 8 zum Ausrücken der Gewindesegmente 7, 7.1 zum Zwecke einer Höhenschnelleinstellung des Rahmenteils 1 wird das Stellorgan 10, wie in Figur 1 durch Blockpfeile angedeutet, mit seinem Schaft 13 tiefer in die Stellorganführung 12 des Grundkörpers 11 eingedrückt. Auf diese Weise wird auf den Bowdenzug 8 ein Zug ausgeübt, sodass die Gewindesegmente 7, 7.1 der Nivellierschraubenführungen 5, 5.1, wie in Figur 2 gezeigt, ausgerückt werden. In dieser Stellung kann das Rahmenteil 1 aufgrund des dann nicht mehr bestehenden Gewindeeingriffes gegenüber den Nivellierschrauben 4, 4.1, 4.1 höheneingerichtet werden. Ist die gewünschte Höhe des Rahmenteils 1 eingerichtet, wird das Stellorgan 10 wieder losgelassen, sodass dann die Gewindesegmente 7, 7.1 wieder in ihre in Figur 11 gezeigte gewindekämmende Stellung zurückverstellt werden. Zum Zwecke einer Zurückstellung ist bei dem dargestellten Ausführungsbeispiel um jede Nivellierschraubenführung 5, 5.1 ein Elastomerring 21 gelegt, gegen dessen Rückstellkraft das jeweilige Gewindesegment 7 bzw. 7.1 aus seiner gewindekämmenden Stellung bei einer Betätigung des Betätigungselementes 9 ausgerückt wird.

Anschließend kann eine Feinnivellierung durch Drehen der Nivellierschrauben 4, 4.1 gegenüber den Nivellierschraubenführungen 5, 5.1 erfolgen.

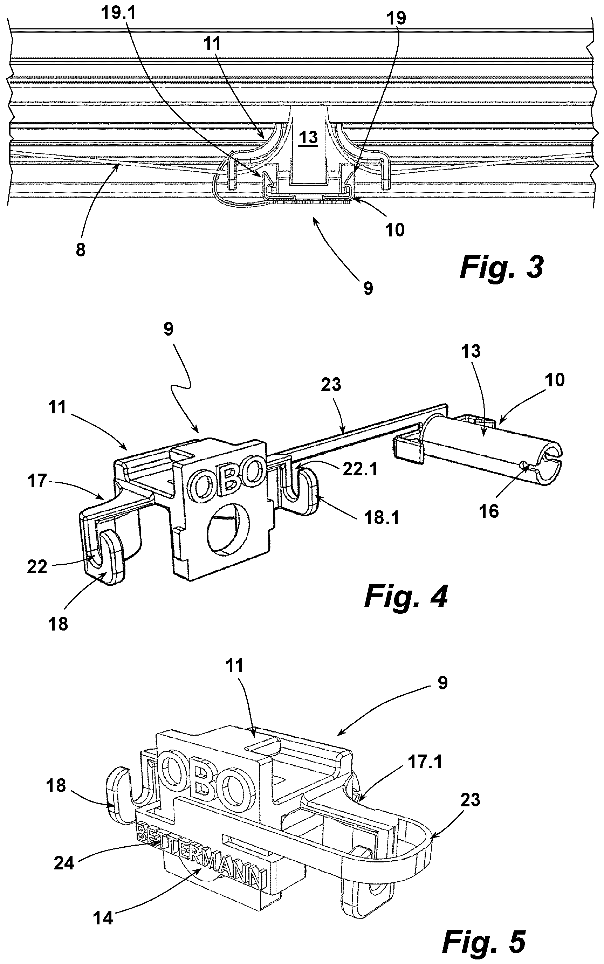

Bei derartigen, in Estrich eingegossenen Unterflurinstallationsbauteilen ist es gewünscht, dass die bodenseitige Abstützung nach Aushärten des Estrichs, entkoppelt ist. Zu diesem Zweck dient die zuvor beschriebene Festlegung des Stellorgans 10 an dem Grundkörper 11. Das Stellorgan 10 wird an dem Grundkörper 11 nach Abbinden des Estrichs festgelegt, wie dieses in Figur 3 gezeigt ist. In dieser Stellung sind die Gewindesegmente 7, 7.1 sodann wieder aus ihrer gewindekämmenden Stellung ausgerückt, sodass der das Rahmenteil 1 hinsichtlich seiner Höhe von den Nivellierschrauben 4, 4.1, 4.1 entkoppelt ist. Da dann der Estrich das Rahmenteil trägt und dieser im Zuge seines Abbindens mitunter etwas schrumpft, kann dieses durch die vorbeschriebene Entkopplung des Rahmenteils 1 gegenüber den Nivellierschrauben 4, 4.1, 4.1 kompensiert werden.

Das Betätigungselement 4 ist in Figur 4 in einer perspektivischen Darstellung gezeigt. Deutlich erkennbar ist die Stellorganführung 12 des Grundkörpers 11. In dieser Darstellung sind auch die Zugmittelführungen 22, 22.1 der Zugmittelführungsarme 17, 17.1 erkennbar. Das Stellorgan 10 ist, wie Figur 4 deutlich zeigt, hülsenartig aufgebaut. Seine Zugmittelführung 16 im Fuß 15 ist deutlich zu erkennen. Bei dem dargestellten Ausführungsbeispiel ist die Zugmittelführung 16 hinterschnitten, sodass das Zugmittel in den Hinterschnitt eingeclipst werden kann. Das Stellorgan 10 ist durch eine Verbindungslasche 23 an den Grundkörper 11 angeformt. Das Betätigungselement 9 ist ein Kunststoffspritzgussteil und somit einstückig hergestellt.

Figur 5 zeigt das Betätigungselement 9 in seiner in Figur 3 gezeigten Stellung, bei der das Stellorgan 10 an dem Grundkörper 11 mit seinen Rastarmen 19, 19.1 festgelegt ist. In dieser Perspektive des Betätigungselementes 9 ist die Ausgestaltung der Betätigungsplatte 14 gut zu erkennen, und zwar dadurch, dass diese außenseitig einen erhabenen Schriftzug 24 als rutschhemmende Applikation trägt.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen näher dargelegt werden müsste.

### Bezugszeichenliste

- 1: Rahmenteil
- 2,2.1: Eckstück
- 3: Rahmenstück
- 4, 4.1: Nivellierschraube
- 5, 5.1: Nivellierschraubenführung
- 6, 6.1: Führungsstück
- 7,7.1: Gewindesegment
- 8: Bowdenzug
- 9: Betätigungselement
- 10: Stellorgan
- 11: Grundkörper
- 12: Stellorganführung
- 13: Schaft
- 14: Betätigungsplatte
- 15: Fuß
- 16: Zugmittelführung
- 17, 17.1: Zugmittelführungsarm
- 18, 18.1: Lasche
- 19, 19.1: Rasthaken
- 20,20.1: Rastnocke
- 21: Elastomerring
- 22, 22.1: Zugmittelführung
- 23: Verbindungslasche
- 24: Schriftzug

## Patentansprüche

1. Unterflurinstallationsbauteil mit einem vor seinem Einbau in einen insbesondere durch Gießen zu erstellenden Fußboden durch Nivellierschrauben (4, 4.1) bodenseitig abgestützten Rahmen (2, 2.1, 3), welche Nivellierschrauben (4, 4.1) mit ihrem Gewinde jeweils ein komplementäres Gewinde einer Nivellierschraubenführung (5, 5.1) des Rahmens kämmen, welche Nivellierschraubenführung (5, 5.1) ein gegenüber zumindest einem weiteren Führungselement verstellbares Gewindesegment (7, 7.1) aufweist, **dadurch gekennzeichnet, dass** an das verstellbare Gewindesegment (7, 7.1) ein flexibles Zugmittel (8) und an dieses wiederum ein manuell betätigbares Betätigungselement (9) angeschlossen ist, mit dem auf das Zugmittel (8) zum Verstellen des Gewindesegments (7, 7.1) aus einer Ausgangsstellung, etwa seiner gewindekämmenden Stellung, in eine zweite Stellung, etwa in seine Freigabestellung, ein Zug ausübbar ist und dass Rückstellmittel (21) zum Zurückstellen des Gewindesegments (7, 7.1) in seine Ausgangsstellung bei nicht mehr betätigtem Betätigungselement (9) vorgesehen sind.

2. Unterflurinstallationsbauteil nach Anspruch 1, **dadurch gekennzeichnet, dass** das Betätigungselement (9) zum Ausüben einer auf das Zugmittel (8) wirkenden Zugkraft translatorisch betätigbar ist.

3. Unterflurinstallationsbauteil nach Anspruch 2, **dadurch gekennzeichnet, dass** das Betätigungselement (9) ein gegenüber einem Grundkörper (11) verstellbares Stellorgan (10) aufweist, wobei der Grundkörper (11) über eine von dem Stellorgan (10) mit seinem Schaft (13) durchgriffene Stellorganführung (12) und über eine Zugmittelführung verfügt, durch die das Zugmittel (8) rückseitig zu der Stellorganführung (12) gehalten ist, damit durch das in der Stellorganführung (12) geführte Stellorgan (10) durch Eindrücken desselben das Zugmittel (8) quer zu seiner Längserstreckung bewegt und somit ein Zug darauf ausübbar ist.

4. Unterflurinstallationsbauteil nach Anspruch 3, **dadurch gekennzeichnet, dass** der Grundkörper (11) zumindest einen in radialer Richtung von diesem abragenden Zugmittelführungsarm (17, 17.1) mit einer Zugmittelführung (22, 22.1) trägt.

5. Unterflurinstallationsbauteil nach Anspruch 4, **dadurch gekennzeichnet, dass** der zumindest eine Zugmittelführungsarm (17, 17.1) gekrümmt ausgeführt ist, wobei sich sein von der Stellorganführung (12) wegweisendes Ende außerhalb der Flucht der Stellorganführung (12) befindet.

6. Unterflurinstallationsbauteil nach einem der Ansprüche 3 bis 5, **dadurch gekennzeichnet, dass** das Stellorgan (10) als zylindrischer Hülsenkörper ausgelegt ist, der an seiner Betätigungsseite eine Betätigungsplatte (14) trägt.

7. Unterflurinstallationsbauteil nach einem der Ansprüche 3 bis 6, **dadurch gekennzeichnet, dass** das Stellorgan (10) wenigstens einen Rastarm mit einem ersten Rastelement (19, 19.1) trägt, das zum Verrasten des Stellorgans (10) am Grundkörper (11) mit einem komplementären Rastelement am Grundkörper (11) zusammenwirkt.

8. Unterflurinstallationsbauteil nach Anspruch 7, **dadurch gekennzeichnet, dass** das Stellorgan (10) zwei einander zu seiner Bewegungsachse gegenüberliegende Rastelemente (19, 19.1) trägt und der Grundkörper (11) zwei komplementäre Rastelemente (20, 20.1) aufweist.

9. Unterflurinstallationsbauteil nach einem der Ansprüche 1 bis 8, **dadurch gekennzeichnet, dass** das Stellorgan (16) mittels eines Verbindungsstreifens (23) an den Grundkörper (11) angeschlossen ist.

10. Unterflurinstallationsbauteil nach einem der Ansprüche 4 bis 9, **dadurch gekennzeichnet, dass** der Grundkörper (11) zwei einander bezüglich des Stellorgans gegenüberliegende Zugmittelführungsarme (17, 17.1) aufweist und dass das Zugmittel (8) an die Gewindesegmente (7, 7.1) von zumindest zwei voneinander beabstandeten Nivellierschraubenführungen (5, 5.1) unter Zwischenschaltung des Betätigungselementes (9) angeschlossen ist.

11. Unterflurinstallationsbauteil nach Anspruch 10, **dadurch gekennzeichnet, dass** das Zugmittel (8) an die Gewindesegmente (7, 7.1) zweiter benachbarter Nivellierschraubenführungen (5, 5.1) angeschlossen ist.

12. Unterflurinstallationsbauteil nach einem der Ansprüche 1 bis 11, **dadurch gekennzeichnet, dass** als Zugmittel ein Bowdenzug (8) vorgesehen ist.

13. Unterflurinstallationsbauteil nach einem der Ansprüche 1 bis 12, **dadurch gekennzeichnet, dass** das zumindest eine verstellbare Gewindesegment (7, 7.1) sich in seiner Ausgangsstellung in seiner gewindekämmenden Stellung befindet.

14. Unterflurinstallationsbauteil nach einem der Ansprüche 1 bis 13, **dadurch gekennzeichnet, dass** als Rückstellmittel jeder Nivellierschraubenführung (5, 5.1) ein elastischer Ring (21) zugeordnet ist, der diese mit ihrem Gewindesegment (7, 7.1) außenseitig einfasst, sodass ein Ausrücken des Gewindesegmentes aus seiner gewindekämmenden Stellung in seine Freigabestellung gegen die Kraft des elastischen Ringes (21) erfolgt.

15. Unterflurinstallationsbauteil nach einem der Ansprüche 1 bis 14, **dadurch gekennzeichnet, dass** dieses eine Unterflurgerätedose ist, die mehrere durch Rahmenstücke (3) miteinander verbundene Eckstücke (2, 2.1) aufweist und dass in jedem Eckstück (2, 2.1) eine Nivellierschraubenführung (5, 5.1) mit einem ausrückbaren Gewindesegment (7, 7.1) vorhanden ist.
